# EUROPÄISCHE PATENTANMELDUNG

(11) **EP 2 947 414 A1**
(43) Veröffentlichungstag der Anmeldung: **25.11.2015**
(21) Anmeldenummer: 15401030.0
(22) Anmeldetag: 16.04.2015
(51) Int. Cl.: G01B 5/00, G01B 3/22

(54) **PRÜFGERÄT UND VERFAHREN ZUR PRÜFUNG VON FUNKTIONSRELEVANTEN MERKMALEN VON SCHEIBENBREMSBELÄGEN FÜR SCHIENENFAHRZEUGE**

(30) Priorität: 06.05.2014 DE 102014106293
(71) Anmelder: Bremskerl-Reibbelagwerke Emmerling GmbH & Co. KG, 31629 Estorf (DE)
(72) Erfinder:
(74) Vertreter: Sroka, Peter-Christian

(57) **Zusammenfassung**

Ein Prüfgerät zur Überprüfung von funktionsrelevanten Merkmalen von Scheibenbremsbelägen für Schienenfahrzeuge, ist dadurch gekennzeichnet, dass es für die Ablage und das Positionieren eines Bremsbelages (12)
- eine ebene Grundplatte (11) mit einer Klemmeinrichtung zum Positionieren des Bremsbelages (12);
- mehrere parallel zur Grundplattenebene verstellbare Messuhren (15) mit
- senkrecht zur Grundplattenebene verstellbaren Messtastem (15.1),
- zum Positionieren der Messuhren (15) mindestens eine Einstellhilfe (18),
- die mit Zentrierpunkten (18.1) zum lagegerechten Positionieren der Messtaster (15.1) versehen ist, und
- eine Klemmeinrichtung zum lagegenauen Festklemmen der Einstellhilfe (18) enthält.

## Beschreibung

Die Prüfung von Scheibenbremsbelägen für Schienenfahrzeuge erfolgt üblicher Weise nur jeweils auf einzelne funktionsrelevante Merkmale bezogen, d.h. eine Verknüpfung der Einzelergebnisse findet nicht statt. Die Dicke eines Bremsbelages wird in der Regel an vier definierten Positionen mit einem Messschieber oder einem Dickenmessgerät geprüft. Alternativ werden auch Höhenanreißgeräte verwendet, mit deren Spitze verschiedene Punkte des Bremsbelages vermessen werden. Eine Prüfung der Ebenheit der Reibfläche findet in der Regel nicht statt.

In der DE 10 2008 020 972 A1 ist eine Vorrichtung zur Prüfung von Trommelbremsbelägen in Bezug auf vorgegebene Dickenmaße und Referenzwerte für Innen- und Außenradien und die lagegenaue Anordnung des Bohrbildes im Belag beschrieben. Diese Vorrichtung enthält zur Positionierung des Trommelbremsbelages zwei horizontal in gleicher Höhe und parallel zueinander liegende Stützträger mit bogenförmig gestalteter Oberseite, deren vorderen Enden durch einen Riegel verbunden sind. Zur Positionierung und Fixierung des Trommelbremsbelages wird ein Absteckstift durch eine Nietbohrung des Trommelbremsbelages und eine darunter befindliche Bohrbuchse des Riegels eingesteckt. Die Vorrichtung enthält mehrere Messuhren mit relativ zu den Stützträgern und dem Riegel verstellbaren Messtastern. Das für einen Trommelbremsbelag vorgesehene Prüfgerät ist nicht zur Überprüfung von Scheibenbremsbelägen geeignet.

In der KR 10 2005 007 1824 A ist ein Prüfgerät zur Messung von Höhenveränderungen von Steinplatten beschrieben. Dieses Prüfgerät enthält eine ebene Grundplatte, auf denen zwei Führungsschienen im Abstand voneinander gelagert sind. Auf den Führungsschienen ist nach Art eines Gleitschlittens eine Gleitstange verfahrbar gelagert. Diese Gleitstange trägt parallel zur Grundplattenebene verstellbare Messuhren, die mit senkrecht zur Grundplattenebene verstellbaren Messtastern ausgerüstet sind, um Unebenheiten bzw. Höhenunterschiede der zu untersuchenden Steinplatte feststellen zu können.

Der Erfindung liegt die Aufgabe zugrunde, ein Verfahren und ein Prüfgerät zu schaffen, um bei einem Scheibenbremsbelag in zuverlässiger Weise die funktionsrelevanten Prüfungen zu ermöglichen.

Zur Lösung dieser Aufgabe wird ein Prüfgerät mit den Merkmalen des Patentanspruchs 1 vorgeschlagen. Bevorzugte Ausführungsformen sind in den Unteransprüchen 2 bis 9 behandelt.

Das erfindungsgemäße Verfahren ist in den Ansprüchen 10 bis 12 beschrieben.

Das erfindungsgemäße Prüfgerät wird im Folgenden anhand der Figuren näher beschrieben:
Figur 1 zeigt in isometrischer Darstellung eine Ansicht einer ersten Ausführungsform des Prüfgerätes;
Figur 2 zeigt das in Figur 1 dargestellte Prüfgerät mit mit der Schwalbenschwanzführung nach unten eingeschobenem Bremsbelag;
Figur 3 zeigt in vergrößerter Darstellung eine Detailansicht des in Figur 1 dargestellten Prüfgerätes mit zugeordneter Einstellhilfe bzw. Kalibriereinrichtung;
Figur 4 zeigt in isometrischer Darstellung eine Ansicht einer abgewandelten Ausführungsform des Prüfgerätes mit mit der Schwalbenschwanzführung nach oben positioniertem Bremsbelag;
Figur 5 zeigt in vergrößerter Darstellung eine Teilansicht des in Figur 4 dargestellten Prüfgerätes mit zugeordneter Einstellhilfe bzw. Kalibriervorrichtung;

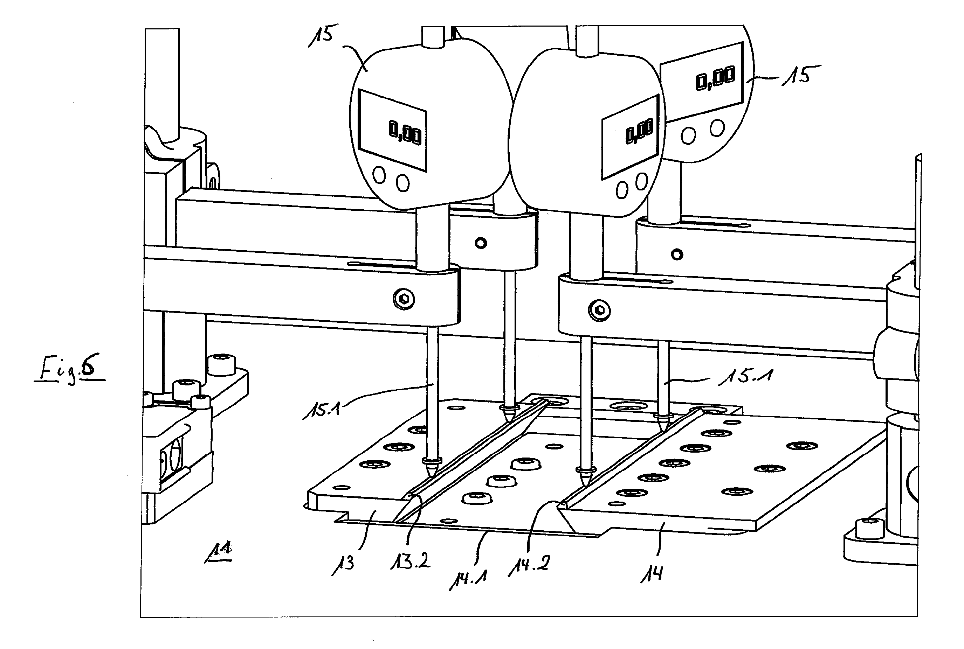

Figur 6 zeigt in vergrößerter Darstellung eine Detailansicht von Figur 2 ohne Bremsbelag und ohne Einstellhilfen.

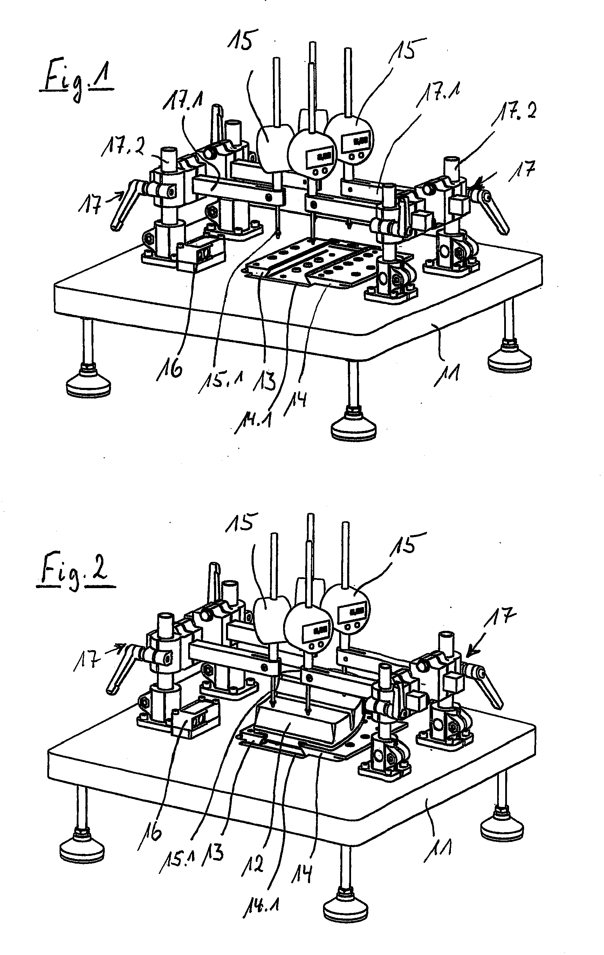

Das in Figur 1 dargestellte Prüfgerät enthält eine Grundplatte 11 mit darauf angeordneten Messuhrhaltern 17. Im Wesentlichen in der Mitte der Grundplatte 11 ist eine Halterung für den zu prüfenden Bremsbelag 12 angebracht. Diese Halterung enthält ein feststehendes Klemmprofil 13 und eine verstellbare Spannbacke 14, die beide mit sich gegenüberliegenden Schwalbenschwanzführungen versehen sind. Das Klemmprofil 13 ist mit einer nach oben gerichteten Stützleiste 13.2 für den Bremsbelag 12 versehen. Die Spannbacke 14 hat eine nach oben gerichtete Stützleiste 14.2 für den Bremsbelag 12.

Zur Aufnahme von Messwerten sind vorzugsweise vier Messuhren 15 vorgesehen, die an den vorderen Enden von horizontal ausgerichteten Tragstangen 17.1 befestigt sind. Diese Tragstangen 17.1 sind in horizontaler Richtung verschiebbar in Messuhrhaltern 17 gelagert und darin festklemmbar, so dass die Messuhren 15 in verschiedenen Positionen parallel zur Grundplattenebene positioniert und fixiert werden können. Die Messuhrhalter 17 und damit auch die Messuhren 15 sind in vertikaler Richtung verstellbar auf Säulen 17.2 gelagert und darauf in verschiedenen Stellungen positionier- und fixierbar.

Jede Messuhr 15 ist mit einem in vertikaler Richtung verstellbaren Messtaster 15.1 versehen, dessen Ende bzw. Spitze gegen einen zu prüfenden Bremsbelag 12 zur Anlage bringbar ist.

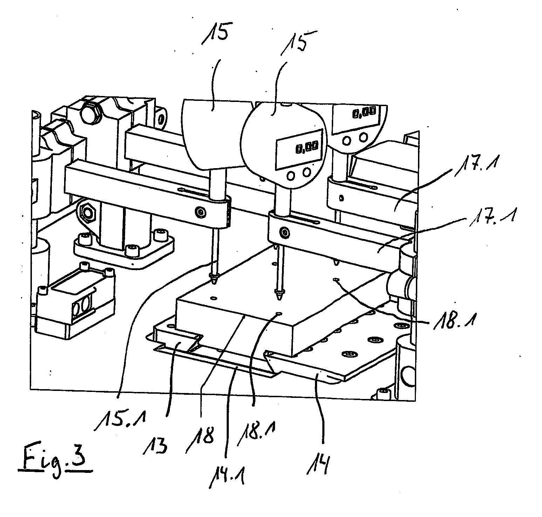

Um für unterschiedliche Bremsbeläge unterschiedliche Messuhrpositionen einstellen zu können, ist eine in Figur 3 dargestellte Einstellhilfe 18 vorgesehen, deren Konfiguration der Konfiguration des zu prüfenden Bremsbelages entspricht bzw. daran angepasst ist. Die Einstellhilfe 18 ist mit Zentrierbohrungen 18.1 versehen, die den vorgesehenen Messstellen an dem Bremsbelag entsprechen.

Ein Lichttaster 16 dient zur Steuerung diverser Betriebsvorgänge des Prüfgerätes, wenn ein von ihm ausgesendeter Lichtstrahl unterbrochen bzw. wieder freigegeben wird.

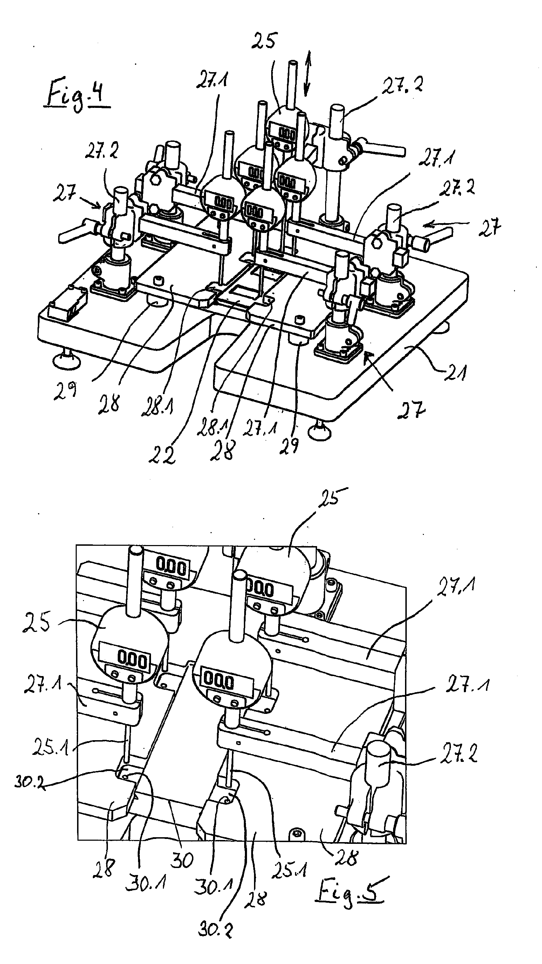

Das in den Figuren 4 und 5 dargestellte Prüfgerät ähnelt in seinem Grundaufbau dem in den Figuren 1 bis 3 dargestellten Prüfgerät.

Auf einer Grundplatte 21 ist eine aus zwei Führungsplattenabschnitten 28 bestehende Führungsplatte mittels Abstandshaltern 29 montiert, die für unterschiedliche Bremsbelagdicken austauschbar sind. Die Lage bzw. Position eines zu prüfenden Bremsbelages auf der Grundplatte 21 ist durch die Anordnung der Führungsplattenabschnitten 28 vorgegeben. Gemäß Figur 4 wird der zu prüfende Bremsbelag 22 zwischen die Grundplatte 21 und die Führungsplattenhälften 28 eingeschoben, ohne dass eine lagegenaue Fixierung des Bremsbelages beispielsweise mittels einer Klemmeinrichtung erforderlich ist.

Vorzugsweise fünf Messuhren 25 sind mit vertikal zur Grundplattenebene verstellbaren Messtastern 25.1 versehen.

Die Messuhren 25 sind an den vorderen Enden von Trägern 27.1 befestigt, die in Messuhrhaltern 27 gelagert und parallel zur Grundplattenebene in den Messuhrhaltern 27 verschiebbar sind, die als Klemmeinrichtungen konzipiert sind.

Die Messuhrhalter 27 sind in vertikaler Richtung verstellbar auf Säulen 27.2 gelagert und darauf in unterschiedlichen Stellungen fixierbar

Die Führungsplattenabschnitte 28 sind mit seitlichen Einbuchtungen 28.1 versehen, so dass eine variable Positionierung der Messuhren 25 über den Einbuchtungen erfolgen kann.

Die in Figur 5 dargestellte Einstellhilfe 30 besteht aus einem blockförmigen Hauptkörper mit zwei seitlichen Flanschleisten 30.2, die mit Zentrierbohrungen 30.1 versehen sind.

Die in den Figuren 1 und 2 dargestellte Vorrichtung wird in der folgenden Weise benutzt:
1. Vorbereitung der Prüfung
   a) Bei Eingriff, z.B. einer Hand, in den Strahlenweg des Lichttasters 16 wird das Klemmprofil 13 verschoben und die Messtaster 15.1 der Messuhren 15 werden vorzugsweise vakuumbetätigt angehoben;
   b) die Einstellhilfe 18 wird z.B. von Hand zwischen die Klemmhilfe 13 und die Spannbacke 14 eingeschoben;
   c) der Lichttaster 16 schaltet nach Entfernen der Hand ab, so dass die bewegliche Spannbacke 14 zum Festklemmen des Bremsbelages in Richtung des stationären Klemmprofils 13 verschoben wird und die Messtaster 15.1 abgesenkt werden;
   d) die Messuhren 15 werden mittels der Messuhrhalter 17 so positioniert und fixiert, dass die Messtaster 15.1 relativ zu den Zentrierbohrungen 18.1 der Einstellhilfe 18 zentriert sind;
   e) der Lichttaster wird durch Handbewegung eingeschaltet, wodurch die bewegliche Spannbacke 14 zur Freigabe der Einstellhilfe 18 nach außen verstellt wird, so dass die Einstellhilfe 18 entnommen werden kann;
   f) die Spitzen der Messtaster 15.1 werden auf die Stützleisten 13.2 und 14.2 des Klemmprofils 13 bzw. der Spannbacke 14 aufgesetzt;
   g) die Messuhren 15 werden auf Null gestellt.
   Das in den Figuren 1 bis 3 dargestellte Prüfgerät ist einsatzbereit.
2. Prüfung des Bremsbelages:
   Der Bremsbelag 12 wird in die Klemmeinrichtung zwischen dem Klemmprofil 13 und der Spannbacke 14 auf den Stützleisten 13.2 und 14.2 aufliegend eingeschoben und durch Verschieben der Spannbacke 14 festgeklemmt. Durch die Klemmung des Belags ist in dem Prüfgerät die Einbausituation des Belags in einem Bremsschuh simuliert. Dadurch kann jetzt ein tatsächlich vorhandenes Montage- bzw. Funktionsmaß durch Absenken und Aufsetzen der Messtaster 15.1 auf den Bremsbelag ermittelt werden. Die gemessene Dicke ist allein bereits ein Prüfmerkmal für den Bremsbelag. Durch Auswerten der z.B. vier Messwerte kann unter Berücksichtigung der Lage der Messpunkte auch die Ebenheit der Bremsbelag-Reibfläche geprüft werden. Außerdem kann dadurch die Parallelität der Bremsbelag-Reibfläche zur Basisfläche der Klemmeinrichtung und damit die Einbausituation im Bremsschuh bewertet werden.

Nach Ermittlung der Messwerte in dem in den Figuren 1 bis 3 dargestellten Prüfgerät oder auch unabhängig davon können in dem in den Figuren 4 und 5 dargestellten Prüfgerät der gleiche Bremsbelag oder ein anderer Bremsbelag zusätzlich oder für sich allein betrachtet weiter in Bezug auf zusätzliche funktionsrelevante Parameter geprüft werden. Die Vorbereitung der Prüfung in dem in den Figuren 4 und 5 dargestellten Prüfgerät erfolgt im Wesentlichen in der folgenden Weise:
a) Durch Hineinbewegen der Bedienungshand in den Strahlenweg des Lichttasters 26 werden die Messtaster 25.1 vorzugsweise vakuumbetätigt angehoben;
b) die Einstellhilfe 30 wird auf die Grundplatte 21 aufgelegt und zwischen die beiden Führungsplattenhälften 28 eingeschoben, derart, dass die in den Flanschleisten 30.2 der Einstellhilfe 30 befindlichen Zentrieröffnungen 30.1 unter den Einbuchtungen 28.1 liegen;
c) die Messuhren 25 bzw. deren Messtaster 25.1 werden dann im Wesentlichen in der oben beschriebenen Weise justiert und nach Aufsetzen der Enden bzw. Spitzen der Messtaster 25.1 auf die Grundplatte 21 eingestellt bzw. auf Null gestellt.

Zum Prüfen eines Bremsbelages wird durch Auflegen der Bremsbelag-Reibfläche auf die Grundplatte 21 und Einschieben des Bremsbelages 22 zwischen die Führungsplattenabschnitten 28 die spätere Einbausituation zwischen Bremsbelag und Bremsscheibe nachgebildet. Danach kann mittels der vorzugsweise fünf Messuhren 25 der Abstand zwischen der Grundplatte und der Anlagefläche des Bremsbelages an den Messpunkten ermittelt werden. Die Auswertung der Messwerte ermöglicht die Prüfung der Ebenheit der Bremsbelag-Rückseite und in Verbindung mit den Messwerten aus dem Prüfgerät gemäß den Figuren 1 bis 3 eine Ermittlung von weiteren Dickenmesswerten.

Durch Kombination der Messwerte, die mittels der beiden einerseits in den Figuren 1 bis 3 und andererseits in den Figuren 4 und 5 dargestellten Prüfgeräte erhalten werden, kann zusätzlich auch die Parallelität der Reibfläche zur Bremsbelag-Rückseite ausgewertet werden.

Insgesamt können somit durch die beiden miteinander kombinierten bzw. aufeinanderfolgenden Messzungen folgende funktionsrelevanten Merkmale eines Bremsbelages geprüft werden:
- bis zu neun Belagdickenmaße an festgelegten Punkten
- Ebenheit der Reibfläche des Bremsbelages
- Parallelität der Reibfläche zur Anlagefläche des Bremsbelages am Bremsschuh
- Ebenheit der Rückseite des Bremsbelages
- Parallelität der Rückseite des Bremsbelages zur Anlagefläche des Reibpartners (Bremsscheibe)

## Patentansprüche

1. Prüfgerät zur Überprüfung von funktionsrelevanten Merkmalen von Scheibenbremsbelägen für Schienenfahrzeuge, **dadurch gekennzeichnet, dass** es für die Ablage und das Positionieren eines Bremsbelages (12 bzw. 22)
- eine ebene Grundplatte (11 bzw. 21) mit einer Klemmeinrichtung zum Positionieren des Bremsbelages (12);
- mehrere parallel zur Grundplattenebene verstellbare Messuhren (15 bzw. 25) mit
- senkrecht zur Grundplattenebene verstellbaren Messtastern (15.1 bzw. 25.1),
- zum Positionieren der Messuhren (15 bzw. 25) mindestens eine Einstellhilfe (18 bzw. 30),
- die mit Zentrierpunkten (18.1 bzw. 30.1) zum lagegerechten Positionieren der Messtaster (15.1 bzw. 25.1) versehen ist, und
- eine Klemmeinrichtung zum lagegenauen Festklemmen der Einstellhilfe (18 bzw. 30) enthält.

2. Prüfgerät nach Anspruch 1, **dadurch gekennzeichnet, dass** jede Messuhr (15 bzw. 25) in vertikaler Richtung verstellbar ist.

3. Prüfgerät nach Anspruch 1 oder 2, **dadurch gekennzeichnet, dass** es zum Prüfen von unterschiedlich konfigurierten Bremsbelägen (12 bzw. 22) mehrere an die Konfiguration der unterschiedlichen Bremsbeläge angepasste Einstellhilfen (18 bzw. 30) enthält, die mit Zentrierpunkten vorzugsweise in Form von Zentrierbohrungen (18.1 bzw. 30.1) zum lagegerechten Positionieren der Messtaster (15.1 bzw. 25.1) versehen sind.

4. Prüfgerät nach einem der Ansprüche 1 bis 3, **dadurch gekennzeichnet, dass** es einen die Betriebsvorgänge des Gerätes steuernden Lichttaster (16 bzw. 26) enthält, der darauf anspricht, dass ein von ihm ausgesendeter Lichtstrahl einerseits unterbrochen und andererseits wieder freigegeben wird.

5. Prüfgerät nach Anspruch 4, **dadurch gekennzeichnet, dass** die Klemmeinrichtung ein stationäres Klemmprofil (13) und eine verstellbare Spannbacke (14) mit Stützleisten (13.2 bzw. 14.2) für den Bremsbelag (20) enthält.

6. Prüfgerät nach Anspruch 5, **gekennzeichnet durch** von dem stationären Klemmprofil (13) und der verstellbaren Spannbacke 14 nach oben gerichteten Stützleisten (13.2 bzw. 14.2).

7. Prüfgerät nach einem der Ansprüche 1 bis 4, **gekennzeichnet durch** zwei in seitlichem Abstand voneinander oberhalb der Grundplatte (21) angebrachten Führungsplattenabschnitten (28) zum Positionieren einerseits der Einstellhilfe (30), die mit in seitlichen Flanschleisten (30.2) angebrachten Zentrierbohrungen (30.1) versehen ist, und andererseits eines Bremsbelages (22).

8. Prüfgerät nach Anspruch 7, **dadurch gekennzeichnet, dass** die beiden Führungsplattenabschnitte (28) im Bereich ihrer sich gegenüber liegenden Ränder mit Einbuchtungen (28.1) versehen sind.

9. Verfahren zum Prüfen von funktionsrelevanten Merkmalen eines Scheibenbremsbelages für Schienenfahrzeuge unter Verwendung eines Prüfgerätes gemäß Anspruch 5, **dadurch gekennzeichnet, dass** man
a) auf einer Grundplatte (11) des Prüfgerätes eine mit Zentrierbohrungen (18.1) versehene Einstellhilfe (18) in der Klemmeinrichtung (13, 14) festklemmt,
b) die Messtaster (15.1) der Messuhren (15) in eine Stellung oberhalb der Zentrierbohrungen (18.1) einstellt und die Messtasterspitzen in die Zentrierbohrungen (18.1) absenkt und zentriert und wieder anhebt,
c) die Einstellhilfe (18) entnimmt,
d) die Messtasterspitzen auf die Stützleisten (13.2 und 14.2) der Klemmeinrichtung (13, 14) aufsetzt und die Messuhren (15) auf Null stellt;
e) die Messtaster (15) anhebt und den Bremsbelag (12) in der Klemmeinrichtung (13, 14) festklemmt, und
f) die Messtasterspitzen zur Messung der Bremsbelagdicke auf den Bremsbelag absenkt.

10. Verfahren zum Prüfen von funktionsgerechten Merkmalen eines Scheibenbremsbelages für Schienenfahrzeuge unter Verwendung eines Prüfgerätes gemäß den Ansprüchen 7 und 8, **dadurch gekennzeichnet, dass** man
g) auf der Grundplatte (21) des Prüfgerätes die mit Zentrierbohrungen (30.1) versehene Einstellhilfe (30) zwischen den Führungsplattenabschnitten (28), die mit sich gegenüber liegenden Einbuchtungen (28.1) versehen sind, ablegt,
h) die Messtaster (21.1) der Messuhren (25) in eine Stellung oberhalb der Zentrierbohrungen (30.1) einstellt und in die Zentrierbohrungen absenkt und zentriert und wieder anhebt,
i) die Einstellhilfe (30) entnimmt
j) die Messtasterspitzen auf die Grundplatte (21) aufsetzt und die Messuhren (25) auf Null stellt,
k) den Bremsbelag mit seiner Reibfläche auf die Grundplatte auflegt und zwischen die Führungsplattenabschnitte (28) einschiebt, und
l) die Messtasterspitzen auf die unter den Einbuchtungen (28.1) liegenden Bremsbelagabschnitte zur Messung von funktionsrelevanten Merkmalen des Bremsbelages aufsetzt.

11. Verfahren zum Prüfen von funktionsgerechten Merkmalen eines Scheibenbremsbelages für Schienenfahrzeuge, **dadurch gekennzeichnet, dass** man die mittels der Ansprüche 9 und 10 erhaltenen Messergebnisse kombiniert und/oder zusammengefasst auswertet.
